# FASCICULE DE BREVET EUROPEEN

(11) **EP 0 798 134 B1**
(45) Date de publication et mention de la délivrance du brevet: **01.12.1999**
(21) Numéro de dépôt: 97104229.6
(22) Date de dépôt: 13.03.1997
(51) Int. Cl.: B44C 3/02, B60C 13/00, B60C 13/04, B05D 7/02, C08J 7/04

(54) **Empilage décoratif pour articles élastomériques**
Dekorative, mehrschichtige Auflage für Elastomergegenstände
Decorative multilayered assembly for elastomeric articles

(30) Priorité: 26.03.1996 FR 9603919
(43) Date de publication de la demande: 01.10.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Cottin, Alain, 63100 Clermont-Ferrand (FR); Peyron, Georges, 63200 Riom (FR)
(74) Mandataire: Dequire, Philippe Jean-Marie Denis

(56) Documents cités:
- EP-A- 0 212 286
- EP-A- 0 604 949
- US-A- 4 461 795
- DATABASE WPI Section Ch, Week 9333 Derwent Publications Ltd., London, GB; Class A82, AN 93-261801 XP002021722 & JP 05 179 092 A (MITSUI TOATSU CHEM INC) , 20 Juillet 1993
- DATABASE WPI Section Ch, Week 8606 Derwent Publications Ltd., London, GB; Class A35, AN 86-039202 XP002021723 & JP 60 259 434 A (SONY CORP) , 21 Décembre 1985

## Description

L'invention concerne les revêtements que l'on peut appliquer à la surface d'articles en matériaux élastomériques, notamment les pneumatiques, pour leur décoration, et particulièrement les revêtements applicables après la vulcanisation de ces articles.

Le besoin de souligner des marquages ou des dessins ornementaux sur la surface d'articles en matériaux élastomériques prévulcanisés par un revêtement, tel une peinture, existe depuis longtemps. A titre d'exemple, le brevet US 2 088 561 propose d'appliquer sur la surface d'un pneumatique une composition organique liquide associant des pigments et du caoutchouc, le brevet US 3 263 990 divulgue l'utilisation de systèmes époxy. Tous ces revêtements présentaient l'inconvénient majeur de se délaminer rapidement de la surface des pneumatiques revêtus.

Pour résoudre ce problème, le brevet US 4 670 496 propose une peinture liquide associant un solvant organique, un mélange d'élastomères diéniques non vulcanisés et d'accélérateurs, et des pigments. Cette peinture utilise le soufre libre des mélanges élastomériques sur laquelle elle est appliquée pour vulcaniser à froid et ainsi créer une liaison durable.

Tout en ayant bien résolu le problème de la durabilité de la liaison, cette peinture présente cependant plusieurs inconvénients : les cires antiozone et les agents chimiques antioxydants peuvent migrer à travers cette peinture, en conséquence l'aspect esthétique peut être pénalisé par l'effleurissement des cires ou la coloration due aux agents chimiques antioxydants, l'utilisation d'un solvant organique en quantité importante pose des problèmes d'hygiène industrielle et, enfin, le mélange des pigments dans la peinture nécessite une grande quantité de pigments souvent très coûteux. L'invention divulgue un empilage décoratif qui améliore sensiblement les problèmes précédents sans dégradation préjudiciable de son adhésion à la surface de l'article élastomérique revêtu.

Le comportement mécanique des polymères non réticulés varie en fonction de la température, d'une zone vitreuse aux basses températures, où le comportement est vitreux, c'est-à-dire rigide et cassant, à une zone d'écoulement fluide aux températures élevées. Entre ces deux zones se trouve une zone appelée "plateau caoutchoutique" où le comportement est caoutchoutique, c'est-à-dire proche de celui d'un élastomère, dès que la masse moléculaire du polymère est suffisante pour qu'il y ait des enchevêtrements (voir : "Viscoelastic Properties of Polymers", John D. Ferry, 3rd. Ed, John Wiley & Sons, 1980, notamment les chapitres 10, 12 et 13).

On appelle "température de transition vitreuse" d'un polymère ("Tg") la température où le comportement mécanique du polymère évolue de ce comportement vitreux, rigide et cassant, à ce comportement caoutchoutique. Cette température de transition vitreuse est une caractéristique essentielle des polymères.

On détermine usuellement les températures de transition vitreuse par analyse enthalpique différentielle (voir Introduction to Thermal Analysis : techniques and applications - Michael E. Brown - Ed. Chapman and Hall - New York 1988). Cette technique, plus connue sous les initiales DSC (Differential Scanning Calorimetry), consiste à déterminer les variations de chaleur spécifique d'un échantillon dont on élève la température. Elle permet de mettre en évidence des transitions ou des réactions qui s'accompagnent de libération d'énergie (exothermique) ou d'absorption d'énergie (endothermique). La transition vitreuse est une transition endothermique.

L'empilage décoratif pour articles en matériau élastomérique selon l'invention se compose de :
(a) un revêtement adhésif pouvant être obtenu à partir d'une première émulsion aqueuse d'au moins un premier polymère appelé constituant I, ledit constituant I étant un homopolymère ou un copolymère ayant une température de transition vitreuse inférieure à 0°C et à base d'au moins un monomère choisi dans le groupe des esters acryliques, méthacryliques et vinyliques ;
(b) une couche de pigments ;
(c) un revêtement transparent pouvant être obtenu à partir d'une seconde émulsion aqueuse d'au moins :
   (α) un polymère appelé constituant II, ledit constituant II étant un homopolymère ou un copolymère ayant une température de transition vitreuse inférieure à 0°C et à base d'au moins un monomère choisi dans le groupe des esters acryliques, méthacryliques et vinyliques ; et
   (β) un constituant III choisi dans le groupe constitué par une silice hydrophile et un homopolymère ou un copolymère à base d'au moins un monomère choisi dans le groupe des monomères acryliques, méthacryliques et vinyliques ledit homopolymère ou copolymère ayant une température de transition vitreuse supérieure à 25°C.

Cet empilage comprend un premier revêtement adhésif obtenu préférentiellement avec un constituant I de température de transition vitreuse inférieure à -15°C, et particulièrement avec un copolymère d'acrylate de butyle et de styrène avec une teneur en poids de styrène de l'ordre de 20 %. La température de transition vitreuse d'un tel polymère est de -21°C.

Une telle émulsion aqueuse permet de former un revêtement continu, souple et adhérent sur la surface du pneumatique même en l'absence de plastifiant. Ce revêtement s'oppose aux migrations jusqu'à la surface de tous les constituants capables de migrer pour effleurir (soufre libre, cires) présents dans les mélanges caoutchoutiques du pneumatique sans qu'il soit nécessaire d'ajouter un agent barrière tel du mica.

Ce revêtement présente aussi un caractère collant qui le rend apte à recevoir une couche de pigments, de préférence lamellaires pour donner à l'empilage un caractère artistique approprié. La forme lamellaire du pigment permet, à quantité identique, d'améliorer considérablement le pouvoir couvrant de la couche de pigments et ainsi d'obtenir des empilages décoratifs d'un très bel aspect.

Le fait d'appliquer une couche continue de pigments plutôt que d'inclure ces pigments dans la seconde émulsion aqueuse permet d'obtenir un très bel aspect esthétique avec une quantité très notablement réduite de pigments.

L'empilage décoratif, selon l'invention, comprend enfin un revêtement transparent posé à la suite de la couche de pigment destiné à fixer et à protéger la couche de pigments, à procurer à l'ensemble un état de surface durable et à être suffisamment souple pour résister à toutes les déformations subies par la surface d'un pneumatique, même en utilisation courante. Cet empilage peut comporter préférentiellement un constituant II de température de transition vitreuse inférieure à -15°C, et particulièrement un copolymère d'acrylate de butyle et de styrène avec une teneur en poids de styrène de l'ordre de 20 %. Le caractère collant de ce revêtement est supprimé par la présence d'un constituant III qui peut être une silice hydrophile avec une teneur en poids comprise entre 1 et 25 parties pour 100 parties de polymère sec. Préférentiellement, la teneur de silice est entre 10 et 15 parties. La silice renforce aussi les propriétés mécaniques du revêtement formé.

Selon une variante de réalisation, le constituant III est un homopolymère ou un copolymère à base d'au moins un monomère choisi dans le groupe des monomères acryliques, méthacryliques et vinyliques, ledit constituant III ayant une température de transition vitreuse supérieure à 25°C.

Un tel constituant III peut, notamment, être un copolymère ou un mélange d'homopolymères d'acrylate d'éthyle et de méthacrylate de méthyle avec une proportion en poids d'acrylate d'éthyle de l'ordre de 55 %, ou du polyacétate de vinyle. Dans ces deux cas, la proportion en poids du constituant III est comprise entre 35 et 55 parties en poids pour 100 parties de polymère sec. En dessous de 35 parties, le caractère collant du revêtement formé est souvent encore marqué et au dessus de 55 parties, le revêtement obtenu, rigidifié, suit difficilement les déformations subies par les pneumatiques.

Le constituant III peut aussi être de l'alcool polyvinylique dans la proportion de 10 à 50 parties en poids pour 100 parties de polymère sec.

Selon un autre exemple, le constituant III est de la poly(N-vinyle-2-pyrrolidone) dans la proportion de 10 à 40 parties en poids pour 100 parties de polymère sec.

Dans ces deux derniers cas, lorsque la teneur en constituant III dépasse les valeurs maximales indiquées, le revêtement formé devient trop rigide ainsi que trop sensible à l'action de l'eau.

Le constituant III peut aussi être un copolymère d'alcool polyvinylique et de poly(N-vinyle-2-pyrrolidone).

Selon une autre variante de l'invention, la seconde émulsion aqueuse peut comprendre, en plus du constituant II et d'un constituant III composé soit d'un copolymère ou d'un mélange d'homopolymères d'acrylate d'éthyle et de méthacrylate de méthyle avec une proportion en poids d'acrylate d'éthyle de l'ordre de 55 %, soit de polyacétate de vinyle, un constituant IV constitué d'un homopolymère ou d'un copolymère vinylique soluble dans l'eau choisi dans le groupe des alcools polyvinyliques, des poly(N-vinyle-2-pyrrolidone) et des copolymères alcool vinylique/N-vinyle-2-pyrrolidone.

Ce constituant IV a préférentiellement une proportion inférieure ou égale à 40 parties en poids pour 100 parties de polymère sec dans la seconde émulsion aqueuse.

L'ajout de ce constituant IV permet d'améliorer le mouillage de la composition sur la surface à recouvrir et la résistance mécanique du revêtement formé après séchage.

Avantageusement, cette variante de la seconde émulsion aqueuse selon l'invention d'au moins trois constituants II, III et IV a pour 100 parties de polymère sec :
(a) de 50 à 75 parties de constituant II :
(b) de 15 à 28 parties de constituant III :
(c) de 7 à 25 parties de constituant IV.

Les différentes variantes de cette seconde émulsion aqueuse selon l'invention peuvent toutes avantageusement comprendre une silice hydrophile dans la proportion de 1 à 25 parties en poids pour 100 parties de polymère sec. Cette silice a un effet thixotrope qui facilite l'application de l'émulsion aqueuse sur la surface à recouvrir. D'autre part, le taux de silice présent dans la composition permet de faire évoluer l'aspect du revêtement obtenu après séchage d'un aspect brillant (taux de 0 à 10 parties environ) à un aspect mat (taux de l'ordre de 15 à 25 parties) en passant par toutes les nuances possibles.

Avantageusement, les deux émulsions aqueuses selon l'invention peuvent aussi inclure des agents tensioactifs pour favoriser le mouillage sur la surface à recouvrir.

Elles peuvent aussi, de façon connue, inclure des agents anti-mousse pour faciliter l'application avec un pistolet.

Pour préparer les émulsions aqueuses selon l'invention, on introduit successivement dans un récipient :
- l'eau ;
- la silice, si nécessaire ;
- l'agent tensioactif actif ;
- l'agent anti-mousse, si nécessaire ;
- l'alcool polyvinylique ou la polyvinyle pyrrolidone selon le cas et si nécessaire ; et
- le constituant I ou les constituants II, III et IV selon le cas.

L'introduction des constituants des émulsions aqueuses se fait à froid. On agite avec des moyens connus jusqu'à obtenir une complète dispersion des produits, puis on filtre l'émulsion obtenue à travers une toile en nylon de 150 µm pour éliminer d'éventuels petits grumeaux de matière mal dispersée.

L'invention a aussi pour objet un procédé de réalisation sur la surface d'un pneumatique d'un empilage décoratif dans lequel :
- on applique sur ladite surface au moins une couche mince d'une première émulsion aqueuse ;
- on laisse sécher cette couche jusqu'à la formation d'un revêtement adhésif ;
- on souffle l'excès de pigment ;
- on applique sur le revêtement adhésif une couche de pigments ;
- on applique sur la couche de pigment au moins une couche d'une seconde émulsion aqueuse ; et
- on laisse sécher cette couche jusqu'à la formation d'un revêtement transparent.

Selon ce procédé, l'épaisseur de la couche de la première émulsion aqueuse déposée sur la surface de l'article élastomérique est telle que, après séchage, l'épaisseur du revêtement adhésif est comprise entre 3 et 10 µm.

De même, l'épaisseur de la couche de la seconde émulsion aqueuse déposée sur la couche de pigments est telle que, après séchage, l'épaisseur dudit revêtement transparent est comprise entre 3 et 10 µm.

L'application des émulsions aqueuses peut se faire par tous les moyens connus, et notamment au pinceau, au rouleau ou par pulvérisation avec un pistolet. L'application de la couche de pigments peut aussi être faite au pinceau.

De préférence, l'application de l'empilage décoratif est faite sur la surface extérieure d'articles réalisés en matériaux élastomériques neufs pour leur donner un caractère artistique marqué.

Une application préférentielle de l'empilage décoratif selon l'invention concerne la décoration de pneumatiques neufs pour leur donner un caractère artistique propre notamment pour des présentations lors d'expositions ou de salons automobiles.

De plus, comme la résistance mécanique de l'empilage décoratif formé est bonne, cet empilage peut rester en place après la mise en service des pneumatiques.

Cet empilage décoratif peut aussi être appliqué sur la surface de tout pneumatique à tout moment, après avoir nettoyé usuellement la surface à décorer.

Même si l'empilage décoratif peut être sensible aux abrasions, chocs que peuvent subir les flancs des pneumatiques en service, il présente l'autre avantage de s'éliminer par usure sous forme d'une poudrette fine sans décollement.

L'invention est illustrée au moyen des exemples ci-après destinés à la décoration de pneumatiques qui ne sauraient constituer une limitation de sa portée.

Dans les exemples, les propriétés des compositions sont évaluées comme suit :
- "efflorescence" : test de l'aptitude de l'empilage à s'opposer aux migrations en surface de tous les constituants susceptibles d'effleurir ;
- "manutention" : test de la résistance mécanique de l'empilage lors d'opérations de manutention et de montage sur jante des pneumatiques (ce test impose des déformations de surface des flancs supérieures à 40 % d'extension) ;
- "tenue en dynamique" : test de la résistance mécanique de l'empilage sous sollicitation dynamique, 12000 kilomètres sur une rouleuse avec une flèche imposée de 35 % à 60 kilomètres par heure, ce test impose une déformation dynamique en surface des flancs de l'ordre de 15 % d'extension ;
- "frottement " : test de la résistance mécanique de l'empilage lors d'opérations de frottement des pneumatiques les uns contre les autres ;
- "râpage trottoir" : frottement du flanc revêtu d'un pneumatique contre un trottoir pendant quelques mètres, test du mode d'élimination de l'empilage due à un frottement mécanique, usure en poudrette ou décollement ;
- "eau" : test de la résistance de l'empilage lors d'une immersion prolongée dans l'eau, c'est une simulation du stockage longue durée d'un véhicule sur un parking dans une flaque d'eau ;
- "chaleur" : test en étuve à 50°C de la résistance de l'empilage pendant au moins six mois ;
- "tenue mécanique après vieillissement" : exposition aux intempéries de pneumatiques revêtus suivie d'un test de résistance mécanique de l'empilage ;
- "vieillissement/aspect" : observation visuelle de l'aspect esthétique de l'empilage après dépôt et en cours de vieillissement ;
- "lavage" : test de la résistance de l'empilage au lavage par frottement avec une solution aqueuse additionnée de savon ;
- "dépôt" : appréciation de la facilité d'application de la composition sur une surface à recouvrir.

Le tableau 1 présente les formulations des revêtements testés, et le tableau 2 les résultats obtenus. Les formulations sont présentées en prenant pour base 100 parties de polymère sec.

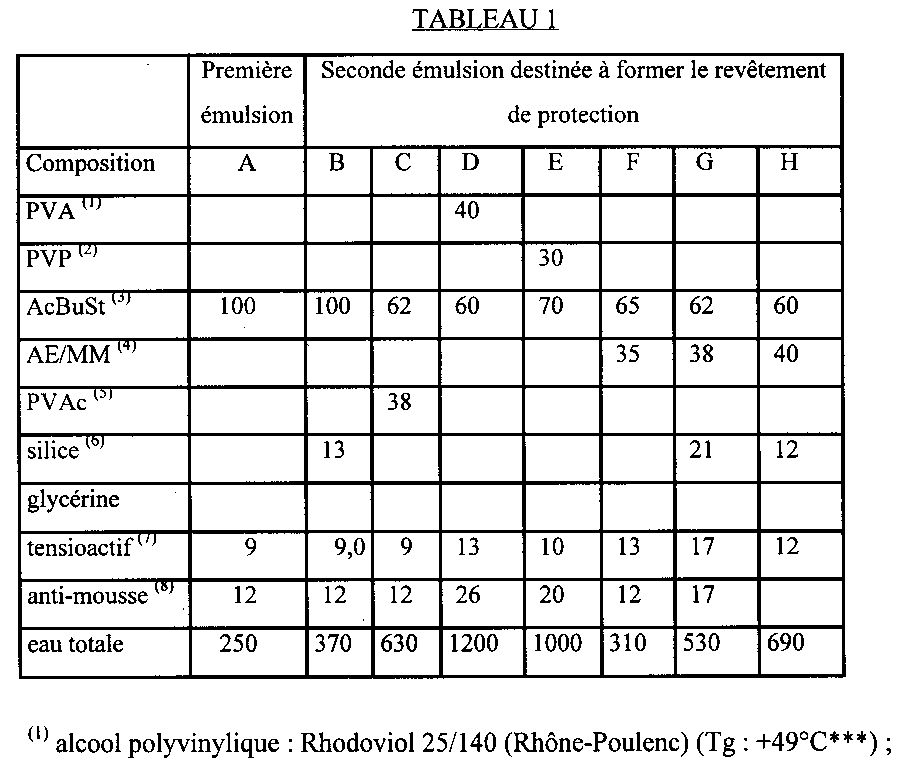

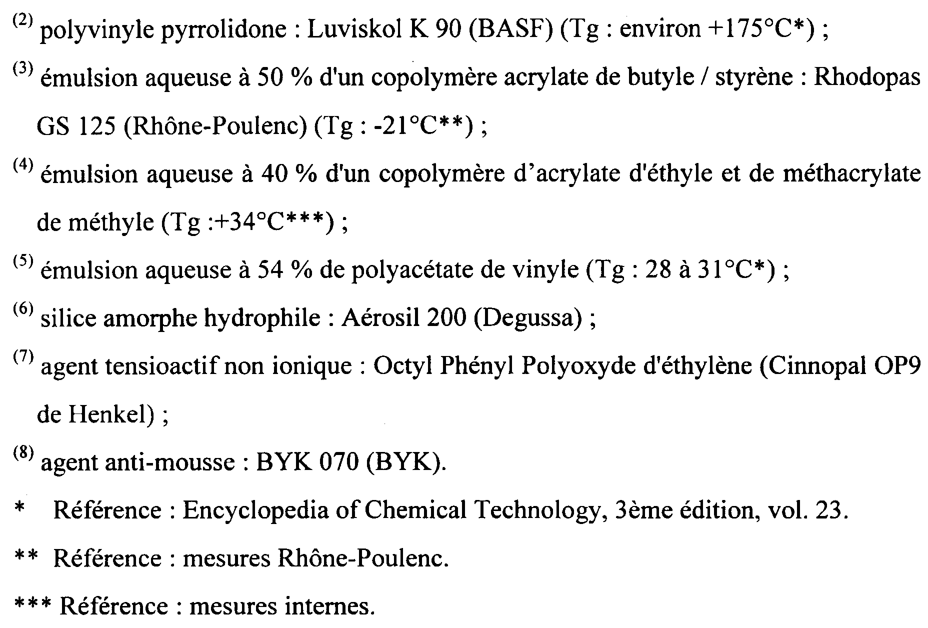

**TABLEAU 2**

| Empilage Compositions | 1 A-B | 2 A-C | 3 A-D | 4 A-E | 5 A-F | 6 A-G | 7 A-H |
|---|---|---|---|---|---|---|---|
| efflorescence | ++ | ++ | +++ | +++ | +++ | +++ | +++ |
| manutention | ++ | ++ | ++ | ++ | ++ | +++ | +++ |
| tenue en dynamique | +++ | +++ | ++ | ++ | +++ | +++ | +++ |
| frottement | ++ | ++ | ++ | ++ | ++ | +++ | +++ |
| râpage trottoir | ++ | ++ | ++ | ++ | ++ | +++ | +++ |
| eau | +++ | + | + | + | +++ | +++ | +++ |
| chaleur | ++ | +++ | ++ | +++ | +++ | +++ | +++ |
| vieillissement / tenue mécanique | ++ | ++ | + | + | +++ | +++ | +++ |
| vieillissement / aspect | ++ | + | ++ | ++ | ++ | +++ | +++ |
| lavage | +++ | +++ | + | + | +++ | +++ | +++ |
| dépôt | ++ | + | ++ | ++ | ++ | ++ | ++ |

L'échelle d'appréciation des essais est la suivante :

| | | | |
|---|---|---|---|
| excellent | +++ | insuffisant | - |
| très bon | ++ | très insuffisant | -- |
| satisfaisant | + | inacceptable | --- |

Tous les revêtements formés avec les exemples de compositions présentés sont très bons à excellents dans le test d'"efflorescence".

L'empilage 1 comprend, comme tous les exemples présentés, une couche adhésive réalisée avec la composition A à base d'un copolymère d'acrylate de butyle et de styrène et une couche de pigments lamellaires à base de lamelles de mica enrobées d'oxyde de titane pour donner des teintes d'interférence métallisées (pigments fournis par la société Merck de marque Iriodin®). Le revêtement de protection correspond à la composition B. Cette composition B est très proche de la composition A. Le polymère a une température de transition vitreuse de -21 °C, en conséquence, l'empilage obtenu a un comportement caoutchoutique et résiste bien à tous les tests de résistance mécanique avec des déformations élevées en statique et en dynamique. Cet empilage est très bon à excellent dans tous les tests.

Une autre solution est présentée avec l'empilage 2 dont le revêtement de protection est réalisé avec l'émulsion C à base d'un mélange d'un copolymère d'acrylate de butyle et de styrène et de polyacétate de vinyle. Relativement à l'empilage 1, 2 est meilleur en test de manutention et de résistance à la chaleur mais n'est qu'acceptable en résistance à l'eau à cause d'un blanchiment qui pourrait être préjudiciable dans le cas d'un pigment très foncé.

Les exemples 3 (émulsions A-D) et 4 (A-E) ont leur revêtement de protection à base du même copolymère d'acrylate de butyle / styrène auquel est ajouté de l'alcool polyvinylique (D) ou de la polyvinyle pyrrolidone (E). Ces deux revêtements ont des comportements très proches et très bons à excellents dans tous les tests à l'exception des tests de résistance à l'eau, à un lavage et au vieillissement/tenue mécanique où ils sont acceptables. Cela est dû à la solubilité dans l'eau de ces deux polymères.

Le choix d'un copolymère d'acrylate d'éthyle et de méthacrylate de méthyle, comme second constituant de l'émulsion aqueuse du revêtement de protection , correspond à l'exemple 5 (émulsions A-F). Le revêtement obtenu est meilleur que les deux précédents dans les tests de résistance à l'eau et au lavage. La résistance mécanique au vieillissement est elle aussi améliorée.

On peut améliorer encore les propriétés mécaniques et l'aspect du revêtement formé en ajoutant de la silice à la composition de l'exemple 5, c'est l'exemple 6 (émulsions A-G).

Un exemple préférentiel d'empilage selon l'invention est l'exemple 7 (émulsions A-H). Sa formulation est très proche de l'exemple 6 avec un taux de silice inférieur, ce qui donne un revêtement avec un aspect un peu plus brillant. Cette formulation ne comporte pas de produit anti-mousse et cela ne dégrade pas les propriétés de dépôt du film.

Dans tous les cas, l'augmentation du taux de silice permet de faire varier du brillant au mat l'aspect de l'empilage obtenu.

Pour évaluer un avantage marqué de l'empilage selon l'invention, un dernier test spécifique de la résistance à l'ozone a été réalisé sur l'empilage 7, le test dit "test Volkswagen". Ce test a pour but d'évaluer la résistance à l'ozone d'un flanc de pneumatique. Il s'agit d'un test statique réalisé sur une coupe de pneumatique de deux centimètres de large prélevée entre la tringle et les nappes sommet. La coupe ainsi réalisée est fixée sur un tube de 20 millimètres de rayon par un fil de laiton. La déformation de surface est de l'ordre de 12 %. Les éprouvettes ainsi conditionnées sont exposées en étuve ozone sous les conditions suivantes :
- Concentration ozone: 200 ± 15 pphm (part per hundred millions)
- Humidité relative: 60 ± 5 %
- Température: 25 ± 2 °C
- Durée: 46 heures

Le test est réussi lorsqu'une observation visuelle ne révèle aucune amorce de fissure.

Un pneumatique a été vieilli pendant quatre mois puis protégé par moitié par un empilage décoratif selon l'invention. Des éprouvettes témoin - sans empilage protecteur - et protégées ont alors été prélevées et testées.

Les éprouvettes témoin présentent des craquelures prononcées.
Les éprouvettes protégées par l'empilage décoratif n'ont aucune amorce de craquelure sur les zones protégées par l'empilage selon l'invention..

Ce test, le plus sévère de tous les tests demandés par les constructeurs automobiles, montre sans ambiguïté l'efficacité de l'empilage décoratif pour protéger de l'action de l'ozone la surface des pneumatiques.

## Revendications

1. Empilage décoratif pour articles en matériau élastomérique comportant :
(a) un revêtement adhésif pouvant être obtenu à partir d'une première émulsion aqueuse d'au moins un premier polymère appelé constituant I, ledit constituant I étant un homopolymère ou un copolymère ayant une température de transition vitreuse inférieure à 0°C et à base d'au moins un monomère choisi dans le groupe des esters acryliques, méthacryliques et vinyliques ;
(b) une couche de pigments ;
(c) un revêtement transparent pouvant être obtenu à partir d'une seconde émulsion aqueuse d'au moins :
(α) un polymère appelé constituant II, ledit constituant II étant un homopolymère ou un copolymère ayant une température de transition vitreuse inférieure à 0°C et à base d'au moins un monomère choisi dans le groupe des esters acryliques, méthacryliques et vinyliques ; et
(β) un constituant III choisi dans le groupe constitué par une silice hydrophile et un homopolymère ou un copolymère à base d'au moins un monomère choisi dans le groupe des monomères acryliques, méthacryliques et vinyliques, ledit homopolymère ou copolymère ayant une température de transition vitreuse supérieure à 25°C.

2. Empilage décoratif selon la revendication 1, dans lequel le constituant I et/ou le constituant II ont une température de transition vitreuse inférieure à -15°C.

3. Empilage décoratif selon l'une des revendications 1 ou 2, dans lequel le constituant I et/ou le constituant II sont un copolymère d'acrylate de butyle et de styrène avec une teneur en poids de styrène de l'ordre de 20 %.

4. Empilage décoratif selon l'une des revendications 1 à 3, dans lequel le constituant III est une silice hydrophile dans la proportion de 5 à 25 parties en poids pour 100 parties de polymère sec.

5. Empilage décoratif selon la revendication 4, dans lequel la teneur en poids de silice hydrophile est comprise entre 10 et 15 parties pour 100 parties de polymère sec.

6. Empilage décoratif selon l'une des revendications 1 à 3, dans lequel le constituant III est un copolymère ou un mélange d'homopolymères d'acrylate d'éthyle et de méthacrylate de méthyle.

7. Empilage décoratif selon la revendication 6, dans lequel le constituant III a une proportion en poids d'acrylate d'éthyle de l'ordre de 55 %.

8. Empilage décoratif selon l'une des revendications 1 à 3, dans lequel le constituant III est du polyacétate de vinyle.

9. Empilage décoratif selon l'une des revendications 7 ou 8, dans lequel la proportion en poids dudit constituant III est comprise entre 35 et 55 parties pour 100 parties de polymère sec.

10. Empilage décoratif selon l'une des revendications 1 à 3, dans lequel le constituant III est de l'alcool polyvinylique dans la proportion de 10 à 50 parties en poids pour 100 parties de polymère sec.

11. Empilage décoratif selon l'une des revendications 1 à 3, dans lequel le constituant III est de la poly(N-vinyle-2-pyrrolidone) dans la proportion de 10 à 40 parties en poids pour 100 parties de polymère sec.

12. Empilage décoratif selon l'une des revendications 6 à 8, dans lequel la couche de revêtement transparent peut être obtenu à partir d'une émulsion aqueuse comprenant en outre un constituant IV, ledit constituant IV étant un homopolymère ou un copolymère vinylique choisi dans le groupe des alcools polyvinyliques, des poly(N-vinyle-2-pyrrolidone) et des copolymères alcool vinylique/N-vinyle-2-pyrrolidone.

13. Empilage décoratif selon la revendication 12, dans lequel le constituant IV a une proportion inférieure ou égale à 40 parties en poids pour 100 parties de polymère sec.

14. Empilage décoratif selon la revendication 13, dans lequel la couche de revêtement transparent peut être obtenu à partir d'une émulsion aqueuse comprenant, pour 100 parties en poids de polymère sec :
(a) de 50 à 75 parties de constituant II ;
(b) de 15 à 28 parties de constituant III ;
(c) de 7 à 25 parties de constituant IV.

15. Empilage décoratif selon l'une des revendications 6 à 14, dans lequel la couche de revêtement transparent peut être obtenu à partir d'une émulsion aqueuse comprenant en plus une silice hydrophile dans la proportion de 1 à 30 parties en poids pour 100 parties de polymère sec.

16. Empilage décoratif selon l'une des revendication 1 à 15, dans lequel les pigments sont des pigments lamellaires.

17. Procédé de réalisation sur la surface d'un pneumatique d'un empilage décoratif, dans lequel :
- on applique sur ladite surface au moins une couche mince d'une première émulsion aqueuse selon l'une des revendications 1 à 3 ;
- on laisse sécher ladite couche jusqu'à la formation d'un revêtement adhésif ;
- on applique sur ledit revêtement adhésif une couche de pigments ;
- on souffle l'excès de pigments ;
- on applique sur ladite couche de pigment au moins une couche d'une seconde émulsion aqueuse selon l'une des revendications 1 à 15 ; et
- on laisse sécher ladite couche jusqu'à la formation d'un revêtement transparent.

18. Procédé selon la revendication 17 dans lequel l'épaisseur de la couche de la première émulsion aqueuse déposée sur la surface du pneumatique est telle que, après séchage, l'épaisseur dudit revêtement adhésif est comprise entre 3 et 10 µm.

19. Procédé selon l'une des revendications 17 ou 18, dans lequel l'épaisseur de la couche de ladite seconde émulsion aqueuse déposée sur la couche de pigments est telle que, après séchage, l'épaisseur dudit revêtement transparent est comprise entre 3 et 10 µm.

20. Pneumatique revêtu d'un empilage décoratif selon l'une des revendications 1 à 16.

## Claims

1. A decorative laminate for articles of elastomeric material, comprising:
(a) an adhesive covering which can be obtained from a first aqueous emulsion of at least one first polymer referred to as constituent I, said constituent I being a homopolymer or a copolymer having a glass transition temperature less than 0°C and having as its base at least one monomer selected from the group consisting of acrylic, methacrylic and vinyl esters;
(b) a layer of pigments;
(c) a transparent covering which can be obtained from a second aqueous emulsion of at least:
(α) one polymer referred to as constituent II, said constituent II being a homopolymer or a copolymer having a glass transition temperature less than 0°C and having as base at least one monomer selected from the group consisting of acrylic, methacrylic and vinyl esters; and
(β) one constituent III selected from the group formed of a hydrophilic silica and a homopolymer or a copolymer having a base of least one monomer selected from the group consisting of acrylic, methacrylic and vinyl monomers, said homopolymer or copolymer having a glass transition temperature greater than 25°C.

2. A decorative laminate according to Claim 1, in which constituent I and/or constituent II have a glass transition temperature less than -15°C.

3. A decorative laminate according to one of Claims 1 or 2, in which constituent I and/or constituent II is/are a copolymer of butyl acrylate and styrene with a styrene content of the order of 20% by weight.

4. A decorative laminate according to one of Claims 1 to 3, in which constituent III is a hydrophilic silica in a proportion of 5 to 25 parts by weight to 100 parts of dry polymer.

5. A decorative laminate according to Claim 4, in which the content of hydrophilic silica is between 10 and 15 parts by weight to 100 parts of dry polymer.

6. A decorative laminate according to one of Claims 1 to 3, in which constituent III is a copolymer or a mixture of homopolymers of ethyl acrylate and methyl methacrylate.

7. A decorative laminate according to Claim 6, in which constituent III has a proportion by weight of ethyl acrylate of the order of 55%.

8. A decorative laminate according to one of Claims 1 to 3, in which constituent III is polyvinyl acetate.

9. A decorative laminate according to one of Claims 7 or 8, in which the proportion by weight of said constituent III is between 35 and 55 parts to 100 parts of dry polymer.

10. A decorative laminate according to one of Claims 1 to 3, in which constituent III is polyvinyl alcohol in a proportion by weight of 10 to 50 parts to 100 parts of dry polymer.

11. A decorative laminate according to one of Claims 1 to 3, in which constituent III is poly(N-vinyl-2-pyrrolidone) in a proportion by weight of 10 to 40 parts to 100 parts of dry polymer.

12. A decorative laminate according to one of Claims 6 to 8, in which the transparent covering layer can be obtained from an aqueous emulsion furthermore comprising a constituent IV, said constituent IV being a homopolymer or a vinyl copolymer selected from the group consisting of polyvinyl alcohols, poly(N-vinyl-2-pyrrolidones) and vinyl alcohol/N-vinyl-2-pyrrolidone copolymers.

13. A decorative laminate according to Claim 12, in which constituent IV has a proportion by weight less than or equal to 40 parts to 100 parts of dry polymer.

14. A decorative laminate according to Claim 13, in which the transparent covering layer can be obtained from an aqueous emulsion comprising, per 100 parts by weight of dry polymer:
(a) from 50 to 75 parts of constituent II;
(b) from 15 to 28 parts of constituent III;
(c) from 7 to 25 parts of constituent IV.

15. A decorative laminate according to one of Claims 6 to 14, in which the transparent covering layer can be obtained from an aqueous emulsion comprising furthermore a hydrophilic silica in a proportion by weight of 1 to 30 parts to 100 parts of dry polymer.

16. A decorative laminate according to one of Claims 1 to 15, in which the pigments are lamellar pigments.

17. A method for producing on the surface of a tyre a decorative laminate, in which:
- at least one thin layer of a first aqueous emulsion according to one of Claims 1 to 3 is applied to said surface;
- said layer is allowed to dry until an adhesive covering is formed;
- a layer of pigments is applied to said adhesive covering;
- the excess of pigments is blown away;
- at least one layer of a second aqueous emulsion according to one of Claims 1 to 15 is applied to said layer of pigment; and
- said layer is allowed to dry until a transparent covering is formed.

18. A method according to Claim 17, in which the thickness of the layer of the first aqueous emulsion deposited on the surface of the tyre is such that, after drying, the thickness of said adhesive covering is between 3 and 10 µm.

19. A method according to one of Claims 17 or 18, in which the thickness of the layer of said second aqueous emulsion deposited on the layer of pigments is such that, after drying, the thickness of said transparent covering is between 3 and 10 µm.

20. A tyre provided with a decorative laminate according to one of Claims 1 to 16.

## Patentansprüche

1. Dekorative, mehrschichtige Auflage für Gegenstände aus elastomerem Material mit:
(a) einer klebfähigen Verkleidung, die aus einer ersten wäßrigen Emulsion mindestens eines ersten Polymers erhalten wurde, das Bestandteil I genannt ist, wobei das genannte Bestandteil I ein Homopolymer oder Copolymer ist, mit einer Glasübergangstemperatur von weniger als 0°C und auf der Grundlage mindestens eines Monomers, das in der Gruppe der Acryl-, Methacryl- und Vinyl-Ester ausgewählt ist;
(b) einer Lage aus Pigmenten;
(c) einer transparenten Verkleidung, die aus einer zweiten wäßrigen Emulsion erhalten werden kann, die mindestens aus dem folgenden besteht:
(α) einem Polymer, das Bestandteil II genannt ist, wobei das genannte Bestandteil II ein Homopolymer oder Copolymer ist, das eine Glasübergangstemperatur von weniger als 0°C aufweist und auf der Grundlage mindestens eines Monomers gebildet ist, das in der Gruppe der Acryl-, Methacryl- und Vinyl-Ester ausgewählt ist; und
(β) einem Bestandteil III, das in der Gruppe ausgewählt ist, die von einer hydrophilen Kieselerde und einem Homopolymer oder Copolymer auf der Grundlage mindestens eines Monomers gebildet ist, das in der Gruppe der Acryl-, Methacryl- und Vinyl-Monomere ausgewählt ist, wobei das genannte Homopolymer oder Copolymer eine Glasübergangstemperatur aufweist, die hoher liegt als 25°C.

2. Dekorative, mehrschichtige Auflage nach Anspruch 1, worin das Bestandteil I und/oder das Bestandteil II eine Glasübergangstemperatur aufweisen bzw. aufweist, die niedriger liegt als -15°C.

3. Dekorative, mehrschichtige Auflage nach einem der Ansprüche 1 oder 2, worin das Bestandteil I und/oder das Bestandteil II ein Copolymer aus Butyl- und Styrol-Acrylat sind, mit einem Anteil von Styrol in der Größenordnung von 20 Gew.%.

4. Dekorative, mehrschichtige Auflage nach einem der Ansprüche 1 bis 3, worin das Bestandteil III eine hydrophile Kieselerde im Anteil von 5 bis 25 Gewichtsteilen auf 100 Teile trockenes Polymer ist.

5. Dekorative, mehrschichtige Auflage nach Anspruch 4, worin der Gehalt an hydrophiler Kieselerde, in Gewicht ausgedrückt, zwischen 10 und 15 Teilen auf 100 Teile trockenen Polymers besteht.

6. Dekorative, mehrschichtige Auflage nach einem der Ansprüche 1 bis 3, worin das Bestandteil III ein Copolymer oder eine Mischung von Homopolymeren von Ethylacrylat und Methylmethacrylat ist.

7. Dekorative, mehrschichtige Auflage nach Anspruch 6, worin das Bestandteil III einen Gewichtsanteil an Ethylacrylat in der Größenordnung von 55% aufweist.

8. Dekorative, mehrschichtige Auflage nach einem der Ansprüche 1 bis 3, worin das Bestandteil III Vinyl-Polyacetat ist.

9. Dekorative, mehrschichtige Auflage nach einem der Ansprüche 7 oder 8, worin der Gewichtsanteil des genannten Bestandteils III zwischen 35 und 55 Teilen auf 100 Teile trockenen Polymers besteht.

10. Dekorative, mehrschichtige Auflage nach einem der Ansprüche 1 bis 3, worin das Bestandteil III aus Polyvinylalkohol im Anteil von 10 bis 50 Gewichtsteilen auf 100 Teile trockenen Polymers besteht.

11. Dekorative, mehrschichtige Auflage nach einem der Ansprüche 1 bis 3, worin das Bestandteil III aus Poly(N-vinyl-2-pyrrolidon) im Anteil von 10 bis 40 Gewichtsteilen auf 100 Teile trockenen Polymers besteht.

12. Dekorative, mehrschichtige Auflage nach einem der Ansprüche 6 bis 8, worin die transparente Verkleidungslage aus einer wäßrigen Emulsion erhalten werden kann, die außerdem ein Bestandteil IV aufweist, wobei das genannte Bestandteil IV ein Vinyl-Homopolymer oder -Copolymer ist, das in der Gruppe der Polyvinylalkohole, der Poly(N-vinyl-2-pyrrolidon) und der Copolymere von Vinylalkohol und N-Vinyl-2-Pyrrolidon ausgewählt ist.

13. Dekorative, mehrschichtige Auflage nach Anspruch 12, worin das Bestandteil IV einen Anteil aufweist, der aus kleiner oder gleich 40 Gewichtsanteilen auf 100 Anteile trockenen Polymers besteht.

14. Dekorative, mehrschichtige Auflage nach Anspruch 13, worin die transparente Verkleidungslage aus einer wäßrigen Emulsion gewonnen ist, die auf 100 Gewichtsteile trockenen Polymers folgende Anteile enthält:
(a) 50 bis 75 Anteile des Bestandteils II;
(b) 15 bis 28 Anteile des Bestandteils III; und
(c) 7 bis 25 Anteile des Bestandteils IV.

15. Dekorative, mehrschichtige Auflage nach einem der Ansprüche 6 bis 14, worin die transparente Verkleidungslage aus einer wäßrigen Emulsion gewonnen werden kann, die außerdem eine hydrophile Kieselerde im Anteil von 1 bis 30 Gewichtsteilen auf 100 Teile trockenen Polymers enthält.

16. Dekorative, mehrschichtige Auflage nach einem der Ansprüche 1 bis 15, worin die Pigmente lamellenförmige Pigmente sind.

17. Verfahren zur Ausführung einer dekorativen, mehrschichtigen Auflage auf der Oberfläche eines Reifens, worin man:
- auf der genannten Oberfläche mindestens eine dünne Lage aus einer ersten wäßrigen Emulsion nach einem der Ansprüche 1 bis 3 aufträgt;
- man die genannte Lage bis zur Bildung einer klebfähigen Verkleidung antrocknen läßt;
- auf die klebfähige Verkleidung eine Lage aus Pigmenten aufträgt;
- den Überschuß an Pigmenten wegbläst;
- auf der genannten Pigmentlage mindestens eine Lage einer zweiten wäßrigen Emulsion nach einem der Ansprüche 1 bis 15 aufträgt; und
- die genannte Lage bis zur Bildung einer transparenten Verkleidung trocknen läßt.

18. Verfahren nach Anspruch 17, worin die Dicke der Lage der ersten wäßrigen Emulsion, die auf die Oberfläche des Reifens aufgetragen ist, so ist, daß die Dicke der genannten, klebfähigen Verkleidung nach der Trocknung zwischen 3 und 10 µm liegt.

19. Verfahren nach einem der Ansprüche 17 oder 18, worin die Dicke der Lage der zweiten wäßrigen Emulsion, die auf die Lage aus Pigmenten aufgetragen ist, so ist, daß die Dicke der genannten transparenten Verkleidung nach der Trocknung zwischen 3 und 10 µm liegt.

20. Reifen, der mit einer dekorativen, mehrschichtigen Auflage verkleidet ist, nach einem der Ansprüche 1 bis 16.
